# EUROPEAN PATENT APPLICATION

(11) **EP 3 557 040 A1**
(43) Date of publication of application: **23.10.2019**
(21) Application number: 18305487.3
(22) Date of filing: 20.04.2018
(51) Int. Cl.: F03B 3/12

(54) **REDUCED SCALE RUNNER AND METHOD OF MANUFACTURING THEREOF**

(71) Applicant: GE Renewable Technologies, 38100 Grenoble (FR)
(72) Inventor: RENAUD, Guillaume, 38100 GRENOBLE (FR); LOWYS, Pierre-Yves, 38100 GRENOBLE (FR); ANDRE, François, 38100 GRENOBLE (FR); CHABERT, Lucas, 38100 GRENOBLE (FR); GAUDION, Sylvain, 38100 GRENOBLE (FR); DESMARAIS, Sylvain, 38100 GRENOBLE (FR); DI MARIA, Bernard, 38100 GRENOBLE (FR)
(74) Representative: Brannen, Joseph Waclaw

(57) **Abstract**

The invention concerns a reduced-scale model of a turbine comprising a crown (1), a band (2) and blades (3) between said band and said crown, wherein the model is a single bloc assembly of said band, said crown and said blades.

## Description

### TECHNICAL FIELD AND PRIOR ART

The invention relates to the field of hydropower industry.

The increased deployment of renewable energy technologies such as wind and solar power contributes to the energy mix. However, these sources of energy are by nature stochastic and therefore there is a new requirement to balance this intermittency to secure the grid stability and supply of electricity. Hydropower is a solution that is very well placed to meet this need: the reservoir naturally provides storage capacity, the turbines have very fast start-up times, a large base is already installed across the world and there is still a large potential for the development of new sites.

Such flexibility however dictates that the turbines are designed to withstand an increased number of transient operations, i.e. load variations and, faster, more frequent start-ups and stops. It also requires that the turbine be operated over a larger range compared to the traditional, smaller zone defined around the Best Efficiency Point (BEP) for longer period of times.

In these new operating ranges and off-design conditions a wide range of hydraulic phenomena is met (due in particular to unsteady behaviour and/or turbulences of the flows) which significantly reduce the runner lifetime. It is a technical challenge for manufacturers to make turbines that guarantee a 0-100% continuous operating range. To do so, they must be able to ascertain the hydraulic and mechanical performance of the turbine under any operating condition.

Most hydraulic turbines of hydroelectric powerplants are designed using numerical methods and computational fluid dynamic simulations. Although these methods allow to design the turbine, a model test conducted in accordance with the INTERNATIONAL STANDARDS IEC 60193 and 62097 is still often required to provide the full validation. Those model tests are conducted by fitting a custom-made small-scale model of the hydraulic turbine onto a test rig which simulates the characteristics and behaviour of the hydroelectric machine. It has been noted however that the IEC norms do not provide specifications for assessing and analysing the mechanical performance and response of the model runners.

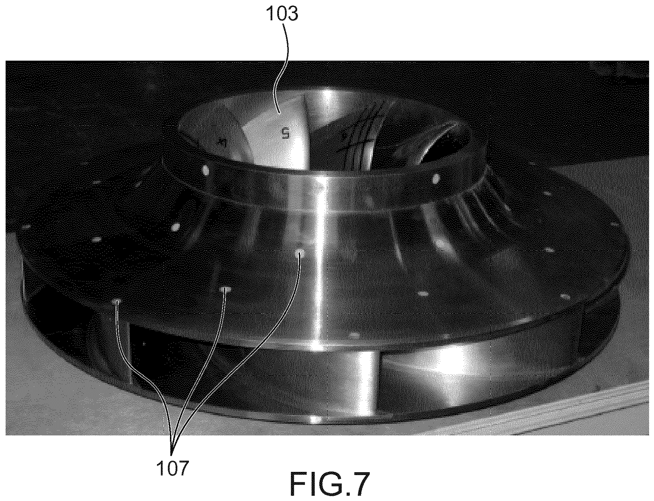

Accordingly, a known reduced scale model 100 of the runner is illustrated on figure 7 and is manufactured by assembling the different parts, in particular the blades 103 to the runner crown and band, using bolts or screws 107 and is specifically designed to study hydraulic similitude.

The assembly process of such a known reduced scale model is time consuming.

Furthermore this reduced scale model is not designed to assess the mechanical behaviour of the turbine, which is needed in view of the new operating ranges and transient conditions. Indeed its mechanical structure is not representative of the real-size turbine which does not include any of the bolts or screws used for assembling a reduced scale model according to the prior art.

In particular the presence of bolts makes the known reduced scale models not adapted for measuring mechanical data (such as strains and/or radial and/or axial displacements) which could then be used for modelling the behaviour of the corresponding full scale industrial turbine. And the assembly zones of the different parts do not form a continuous medium even when the bolts are tightened.

There is thus a need for new reduced-scale models, adapted to assess the new operating conditions of turbines and adapted for measuring mechanical data of the model.

There is also a need for a new manufacturing process of such reduced-scale models, easier to perform and less time consuming than the known manufacturing process.

This applies both to reduced-scale models adapted for measuring mechanical data of the model but also to reduced-scale models adapted to perform hydraulic tests.

There is thus also a need for new reduced-scale models adapted to perform hydraulic tests.

There is also a need for a new manufacturing process of reduced-scale models adapted to perform hydraulic tests.

### SUMMARY OF THE INVENTION

The invention first concerns a new reduced-scale model, comprising at least a band, a crown and blades between said band and said crown, wherein the model is or comprises a mechanical single bloc assembly of said band, said crown and said blades.

A reduced-scale model according to the invention has no assembly zones with bolts (or screws or any other fastening means) between different portions or parts which are mentioned above.

In a reduced-scale model according to the invention the mechanical connections between the different parts, for example between the blades, the crown and the band are similar to those of the real size turbine, i.e. they are bound by very strong liaisons. There is thus a mechanical continuity between any two neighbouring parts of the model.

A model according to the invention thus allows an assessment of both mechanical and hydraulic behavior of a real-size turbine in all possible operating conditions, including transient operations, for example start and stop load variations or steady operation in all operating range.

Preferably a distance or an opening (C1) separating two neighbouring blades is between 5 mm and 14 mm (or 10 mm or 7 mm) or is less than 14 mm or 10 mm or 7 mm.

Preferably a recovery factor (C2) of a reduced scale model according to the invention is higher than 720° or 860° or 1000°.

According to another aspect, a reduced-scale model according to the invention comprises at least a band, a crown and blades between said band and said crown, wherein :
- a distance or an opening (C1) separating two neighbouring blades is between 5 mm and 14 mm (or 10 mm or 7 mm) or is less than 14 mm or 10 mm or 7 mm;
- and/or a recovery factor (C2) is higher than 720° or 860° or 1000° .

A reduced-scale model according to the invention can include at least one sensor or gauge, for example at least one pressure sensor and/or strain gauge and/or accelerometer and/or displacement sensor; mechanical data can thus be measured. A reduced-scale model according to the invention can further comprise one or more groove and/or duct and/or channel for positioning at least one electrical wire therein. Such wires are for example for connecting one or more sensor or gauge located on the reduced-scale model.

Hydraulic tests can be performed with a reduced-scale model according to the invention without any sensor or gauge.

A reduced-scale model according to the invention may have assembly surfaces or lines along which two different parts of the model were brazed or glued or welded together.

In a reduced-scale model according to the invention, the number of blades is for example comprised between 13 and 19 for a Francis turbine, and between 7 and 11 for a pump turbine.

A reduced-scale model according to the invention is for example made of aluminum or titanium or PVC or stainless steel or bronze.

It is also an object of this invention to provide methods for manufacturing reduced scale "mechanical" models of runners that allow an assessment of both mechanical and hydraulic behavior of the real-size turbine, preferably in all possible operating conditions and by a cost-effective process.

A process according to the invention for manufacturing a reduced-scale model turbine, in particular of the type disclosed above, comprises manufacturing a mechanical single bloc assembly of a band, a crown and blades.

According to another aspect, the invention concerns a process for manufacturing a reduced-scale model turbine, in particular of the type disclosed above, said reduced-scale model comprising at least a band, a crown and blades between said band and said crown, wherein :
- a distance or an opening (C1) separating two neighbouring blades is between 5 mm and 14 mm (or 10 mm or 7 mm) or is less than 14 mm or 10 mm or 7 mm;
- and/or a recovery factor (C2) is higher than 720° or 860° or 1000°.

A process according to the invention can further comprise positioning at least one sensor or gauge against a surface of said model, for example at least one pressure sensor and/or strain gauge and/or accelerometer and/or displacement sensor.

A process according to the invention can further comprise forming at least one groove or via or duct and introducing at least one electrical wire in said at least one groove or via or duct.

A process according to the invention can also further comprise at least one of a polishing step and/or anodization step. For example a reduced scale model can be made with a thin oversize, and then polished to reach an acceptable roughness, for example with a method like MMP and/or it can eventually be locally machined.

A process according to the invention can be selected from among an investment casting process, a strong assembly process, an additive printing and monobloc machining process.

For an investment casting process, the material of the reduced-scale model can be aluminum or titanium.

For a strong assembly process, different parts of the model can be assembled by brazing or welding or with help of glue. Different parts of the scaled model runner can be first individually machined with an acceptable roughness. For example, the different parts can be the different blades, shroud, hub. The runner can also be divided horizontally, or vertically or along any other direction: one of the above strong assembly processes is available to assemble said different parts. When the model is glued or welded, at least one sensor or gauge can be positioned against a surface of a part of the model before assembly, which is favorable for manufacturing models having at least one sensor or gauge located in zones which are difficult to reach after assembly, for example because the opening between two neighboring blades is less than 17 mm or less than 13 mm or 10 mm.

For an additive printing process, the material of the reduced-scale model can be plastic or metal.

For a monobloc machining process, the material of the reduced-scale model can be aluminum or PVC or stainless steel or bronze.

### BRIEF DESCRIPTION OF THE DRAWINGS

- Figure 1 shows a reduced scale model according to the invention;
- Figure 2 shows a view of a reduced scale model according to the invention obtained by an investment casting process;
- Figure 3 shows a view of part of a reduced scale model according to the invention obtained by a brazing process;
- Figure 4 shows a view of part of a reduced scale model according to the invention during the model assembly by a gluing process;
- Figures 5A and 5B show how some geometrical parameters of a reduced scale model can be measured;
- Figures 6A and 6B show aspects of a welding process to manufacture a reduced scale model;
- Figure 7 shows a prior art reduced scale model, assembled with bolts.

### DETAILLED DESCRIPTION OF SPECIFIC EMBODIMENTS

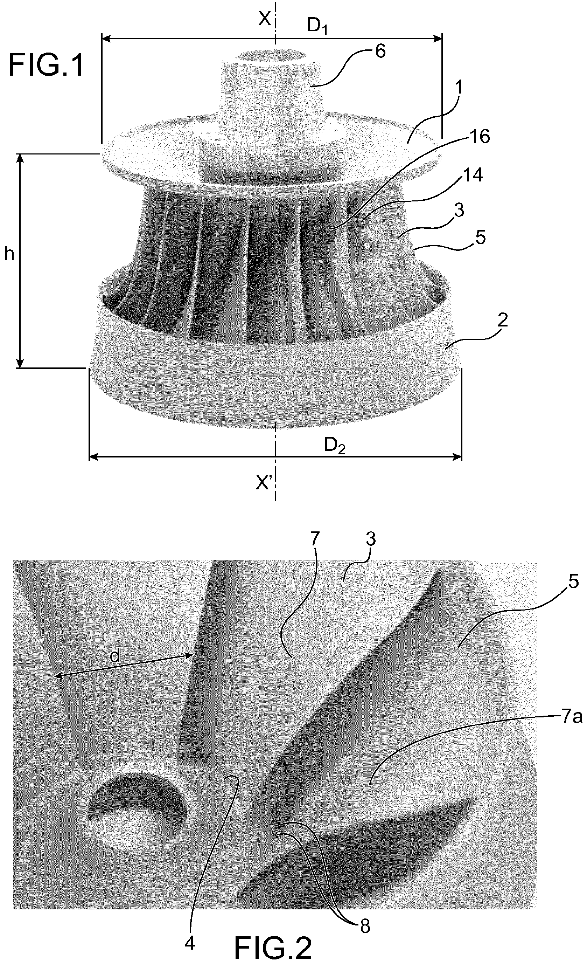

An example of a reduced scale model according to the invention is illustrated on figure 1. Figures 2-5B show views of particular aspects of a reduced scale model according to the invention, obtained by different manufacturing processes.

An example of a reduced scale model of a turbine comprises a circular crown 1 and a circular band 2 facing the crown. Each of them has a diameter between 10 cm and 40 cm; It is rotational symmetrical around an axis XX' (the rotation axis of the model).

Blades 3 extend between the crown 1 and the band 2. Each blade has a curved shape or, more generally, a warped shape (which can be seen on figure 2) between two ends 4 (see figure 2), 5 (see figures 1, 2 and 5). One end 4 of each blade is close to the center of the band and of the crown, the other end 5 is at, or close to, the periphery of the band. Reference 6 is a hub.

This reduced scale model is that of a Francis turbine. Alternatively it can be that of a pump or a pump-turbine (for simulating operations in pump mode, in which the model is used in a reversed mode of the turbine mode); in this case, the trailing edge of each blade is designed to work as a leading edge.

In view of the new operating ranges a reduced scale model according to the invention preferably includes on-board instrumentation such as pressure sensors and strain gauges to analyse the dynamic solicitation and the mechanical parameters of the structure.

One or more sensor, for example one or more pressure sensor(s) 14 and/or one or more strain gauge(s) 16 and/or more accelerometer(s) or one or more displacement sensor(s) can be positioned against the surface of the model, for example the surface of one or more blade 3. Such sensor(s) are for measuring and analyzing the mechanical response of the runner.

However, a reduced scale model according to the invention can also be used without on-board instrumentation, for performing hydraulic tests.

Grooves or passages or ducts can be formed at or in the surface of a model according to the invention in order to position one or more electrical wires therein to connect one or more pressure sensor 14 and/or strain gauge 16. For example, one or more groove(s) 7, 7a can be formed at or in the surface of one or more blade(s) 3, as illustrated on figure 2. One or more passage(s) or duct(s) 8 can also formed in the model for one or more electrical wires after the model has been manufactured by one of the methods explained below, for example after investment casting (figure 2).

A reduced scale model according to the invention has dimensions much smaller than those of an industrial turbine: the scale ratio is for example between 5 and 20. The diameter D₁ of the circular crown 1 is for example between 200 mm and 400 mm. The diameter D₂ of the circular band 2 is for example between 200 mm and 350 mm or even 400 mm. The height h (figure 1) of the model, measured along the axis XX', is for example between 100 and 300 mm.

According to the present invention, the reduced scale model is preferably made of a single bloc, without bolts, screws, and rivets. A reduced scale model according to the invention is homogeneous, continuous and isotropic.

Prior art models can be disassembled because the means used for fastening the different parts together are reversible. Because a model according to the present invention offers a mechanical continuity between any two points, different parts of said model cannot be easily disassembled without breaking them. The absence of reversible fastening means can be easily seen when observing a model according to the invention, as can be seen for example on figures 1 - 4.

Without any fastening means like bolts, or screws, or pins, or rivets, a model according to the invention is designed to correctly assess the mechanical behavior of a turbine, in particular by measuring reliable mechanical parameters like strains, and/or thrusts etc with help of one or more gauge or sensor. Even if it has neither a gauge nor a sensor, and is thus not adapted to evaluate mechanical parameters, it is nevertheless adapted to assess the hydraulic behavior of the turbine.

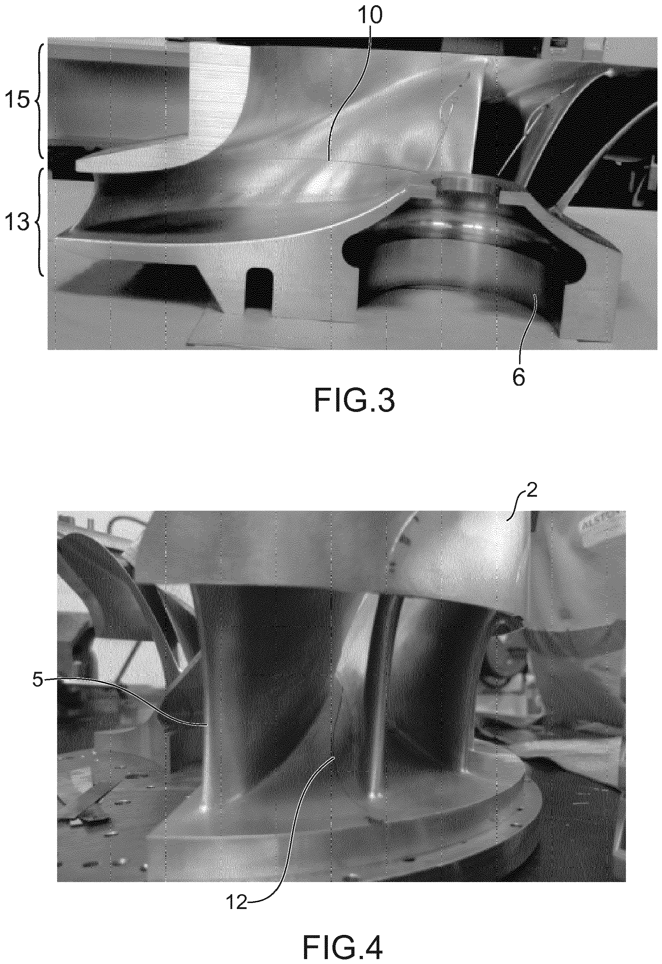

In particular the surface of the model offers a mechanical continuity between any two neighboring parts, especially when such neighboring parts are assembled together, preferably by one of the processes discussed below. Figure 3 (respectively 4) shows a line 10 (respectively 12) along which two different parts of a model were brazed (respectively glued) (actually the two parts were brazed - respectively glued - along two corresponding planes or surfaces but only line 10 - respectively 12 - can be seen from outside). These lines 10, 12 do not affect the structural and mechanical continuity between the different parts thus assembled. In particular the lines 10, 12 do not affect the results of measurements of mechanical properties in contrast to models known in the prior-art.

The tests and measurements made with such a reduced scale model are thus free of the errors affecting them when implementing reduced scale models assembled with blots, screws, pins and/or rivets.

According to an example, the number of blades 3 is comprised between 13 and 19 for a Francis turbine and between 7 and 11 for a pump turbine, depending on the hydraulic parameters. A single bloc structure according to the invention is particularly interesting for reduced scale models having a great number of blades, for example 19, in particular because it is more difficult - if not impossible - to access to internal parts of the runner through the channels formed between two neighboring blades 3.

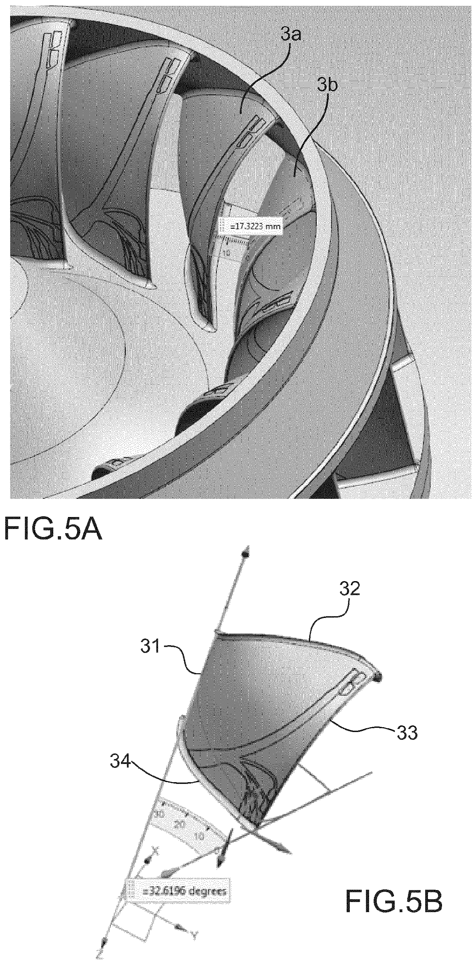

Depending on the number of blades 3, the distance (or opening) d (see figure 2) between neighboring blades can be less than 17 mm, or even less than 14 mm or than 10 mm or than 7 mm, for example larger than 3 mm or 5 mm . d is defined as the smallest distance d between two neighboring blades. An example of a measurement of d is illustrated on figure 5A, where d is between the root of two neighboring blades 3a, 3b. Reduced scale models with a smaller opening, for example less than 14 mm are particularly interesting for Francis turbines.

A reduced scale runner according to the invention can have an overlap factor higher than 600° or even higher than 720° of 860° or 1000°. Reduced scale models with a higher overlap factor, for example more than 600° or 720° are particularly interesting for pump turbine models.

The overlap factor is not scale dependent.

For each blade, the overlap is the maximal angle between two points of the blade projection in a plane perpendicular to the rotation axis of the runner. Figure 5B shows an example of a blade 3 having an overlap of 32.6196°, references 31 and 33 respectively designating the leading and trailing edges of the blade, comprised between a side 32 turned to the crown and a side 34 turned to the band.

The overlap factor of the whole runner is the sum of the overlap of all the individual blades of the runner.

In case of splitter blades (comprising pairs of long and small blades arranged periodically), the sum of the overlap of the small blade and of the overlap of the long blade is first calculated; this sum is then multiplied by the number of pairs of long and small blades.

Different processes will now be explained to manufacture a reduced scale runner according to the invention.

A first process which can be implemented for manufacturing a reduced scale runner according to the invention is an investment casting process, also known as "lost wax casting", with help of a sacrificial pattern made of wax.

The scale model can be casted with a thin oversize, and then polished to reach an acceptable roughness, for example with a method like MMP (micro machining process) and/or it can eventually be locally machined.

Investment casting enables to manufacture a reduced scale model in full homothetic geometry with an industrial turbine, including the corner radii, the thickness of blades, the labyrinth, the crown, the band and the flange to couple the runner to the main shaft. The investment casting allows also having most of material properties in similitude with the industrial runner, for example isotropic behavior of material, continuous assembly between blades, crown and band hub etc.

Finally, the casted reduced scale model can be instrumented with sensors, for example one or more stress gage and/or pressure sensor and/or displacement sensor. One or more groove(s) or via(s) or duct(s) can be made in the model (see for example figure 2) to introduce therein electrical wires for connection to strain gauges and pressure sensors which can be glued against the surface of the model. Alternatively a casted reduced scale model not instrumented with sensors is adapted to performing hydraulic tests.

A preferred material for implementing this process is aluminum, because of its low melting temperature. However, it is recommended to anodize the final product, obtained after investment casting. Passages or vias or ducts for introducing electrical wires therein are preferably made in the reduced scale model after investment casting, and possibly after polishing, but before anodization, so that their walls are also anodized.

Another material for implementing this process is titanium which has a high tensile strength. Furthermore, it does not need to be anodized.

A second process which can be implemented for manufacturing a reduced scale runner according to the invention is a strong assembly process.

The parts are first manufactured and then strongly assembled by different ways, for example by brazing or welding; alternatively, the different parts are glued together.

Several of these different methods can be combined for making a same reduce scaled model runner. The advantages of all these methods is that the surface of the model offers continuity between the different parts assembled together.

Concerning welding, different welding techniques can be implemented, for example manual metal arc welding or autogenous welding or electron beam welding or friction stir welding or narrow gap welding or TIG (Tungsten Inert Gas) welding. They all warrant an exact mechanical continuity .

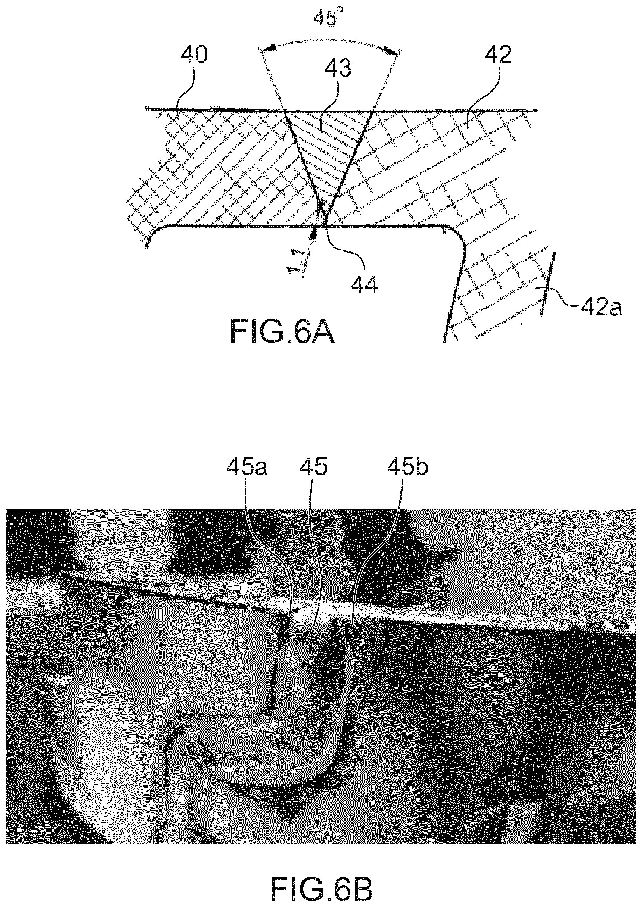

Preferably, as illustrated on figure 6A:
- two parts 40, 42 to weld are first machined in order to have the required roughness and a geometric tolerance according to the IEC 60193 and 62097 standards;
- and/or a throat 43 prepared for welding metal includes a root face (or a lower joint) 44 in order to avoid excess material at the root of the final seam.

Parts 40 and 42 can for example be two parts of the crown or of the band. Reference 42a designates a portion of a blade.

A plurality of welding paths can of course be made in order to obtain the required assembly.

Figure 6B shows a first welding path 45 of an assembly according to the invention. In this case, the band of a Francis scaled runner is welded. A plurality of welding paths are then performed in order to obtain the required assembly. For example two further welding paths can be made on the sides 45a, 45b of the first welding path 45.

An advantage of this method for the reduced scale model according to the invention is that at least one sensor or gauge can be attached to the surface of one or more of the parts to assemble, before welding. This allows positioning at least one sensor or gauge at locations which could be difficult or impossible to reach after the model is assembled.

Brazing can notably be implemented between parts which can be positioned horizontally because of the melted metal employed for assembling the parts together. For implementing brazing it is recommended to first calculate the exact quantity of material to add, so that unnecessary material does not flow over the surface of the model, in particular along those parts along which a liquid will flow during tests performed with the model.

Preferably the clearance between the two parts to braze is between 0.1 mm and 1 mm. If it is too large (for example larger than 1 mm), there is a risk to create gaps in the final joint, which means that portions of the two parts are not well brazed. If clearance is too thin (for example thinner than 0.1 mm), there is a risk of excess brazing material flowing over the surface of the assembled parts, thus creating beads, requiring a further machining or grinding step.

The brazing material is a strip of material, for example tin or copper or silver or zinc or alloy of this material, with a thickness of 0.8 mm - 1 mm. If it is aluminum an anodizing step is performed after brazing.

The final brazing joint 10 (figure 3) preferably has a thickness less than 0.5 mm, more preferably less than or equal to about 0.1 mm (which results from finite elements calculations and which is a good compromise between minimizing errors on mechanical tests and a realistic precision of assembly of the two parts).Preferably two parts 13,15 to be brazed are prepared so that they have similar slenderness ratio. For example the slenderness ratio of part 13 of figure 3 (part 13 is on the side of the band) is approximately the same as the part 15 (which is on the side of the crown), thus avoiding a situation where one of the parts is too slender compared to the other one (which makes brazing difficult). Figure 3 further shows a joint 10 resulting from a brazing process between the two parts 13, 15.

Gluing is easier to implement than brazing, but the assembly obtained by gluing is more fragile than by brazing. A glue material for manufacturing reduced scale models is preferably resistant over time to humidity and to mechanical constraints; preferably it is a bi-component adhesive or glue material, for example an epoxy adhesive or glue.

Gluing is preferably performed under controlled atmosphere, most preferably humidity controlled and a in temperature range of 5°- 40°C.

The final gluing joint 12 (figure 4) preferably has a thickness less than 0.5 mm, more preferably less than or equal to about 0.1 mm (which results from finite elements calculations and which is a good compromise between minimizing errors on mechanical tests and a realistic precision of assembly of the two parts).

An advantage of this method for the reduced scale model according to the invention is that at least one sensor or gauge can be attached to the surface of one or more of the parts before they are glued together. This allows positioning at least one sensor or gauge at locations which could be difficult or impossible to reach after the model is assembled.

An example of a detailed brazing process for manufacturing reduced scale models according to the invention comprises the following steps:
- the individual reduced scale parts are first manufactured, for example the crown 1, the band 2 and the blades 3 (figure 1);
- the individual reduced scale parts are temporarily assembled and maintained together;
- the thus assembled parts are immersed in a bath of salts ;
- the assembled parts are then introduce into an oven to melt the brazing material;
- the brazed parts are then cooled and the surface of the reduced scale modeled is cleaned;
- a final anodizing step can be performed.

In any strong assembly process, passages like grooves 7, 7a or ducts 8 (figure 2), if any, are made before assembly of the different parts together.

A third process which can be implemented for manufacturing a reduced scale runner according to the invention is an additive printing process.

Different additive techniques can be implemented, for example powder bed fusion, fused deposition modeling (FDM), metal additive manufacturing, CLAD additive manufacturing. Stereolithography is preferred because of the final isotropy.

A material for implementing this process is for example a plastic material or a metal., preferably a material allowing a deformation less than 0.5 mm of the trailing edge of the blades loaded during the test (this can be evaluated with help of a finite elements simulation).

The roughness of the final model is preferably less than 8 µm.

Passages grooves 7, 7a or ducts 8 (figure 2) can be made during the additive printing process.

A fourth process which can be implemented for manufacturing a reduced scale runner according to the invention is single bloc manufacturing.

According to this fourth process a small scale runner is machined from a single piece of a material, for example selected from among aluminum, PVC, stainless steel, bronze, etc

The advantage of this process is that there is no need to assemble parts together and to add metal or glue between different parts. It is time consuming because it requires machining a material to make all parts of the runner including the blades and the ducts or channels for the wires.

## Claims

1. A reduced-scale model of a turbine comprising a crown (1), a band (2) and blades (3) between said band and said crown, wherein the model is a single bloc assembly of said band, said crown and said blades.

2. A reduced-scale model according to claim 1 or 2, wherein the turbine is a pump-turbine.

3. A reduced-scale model according to claim 1 or 2, wherein:
- a distance or an opening (d) separating two neighbouring blades is less than 14 mm or less than 10 mm or less than 7 mm;
- and/or an overlap factor of the model is higher than 720° or higher than 860° or higher than 1000°.

4. A reduced-scale model according to any of claims 1 to 3, comprising at least one sensor, for example at least one pressure sensor (14) and/or at least one strain gauge (16) and/or at least one accelerometer and/or at least one displacement sensor.

5. A reduced-scale model according to any of claims 1 to 4, further comprising one or more groove (7, 7a) and/or duct (8) and/or channel for positioning at least one electrical wire therein.

6. A reduced-scale model according to any of claims 1 to 5, further comprising assembly lines (10, 12) along which two different parts of the model were brazed or glued or welded together.

7. A reduced-scale model according to any of claims 1 to 6, comprising brazing or gluing joints or lines (10, 12) having a thickness less than 0.5 mm or 0.1 mm.

8. A reduced-scale model according to any of claims 1 to 7, wherein:
- the turbine is a Francis turbine and the number of blades is comprised between 13 and 19;
- or the turbine is a pump-turbine and the number of blades is comprised between 7 and 11.

9. A reduced-scale model according to any of claims 1 to 8, wherein the reduced-scale model is made of aluminum or titanium or PVC or stainless steel or bronze.

10. A process for manufacturing a reduced-scale model of a turbine comprising at least a crown (1), a band (2) and blades (3) between said band and said crown, said process comprising manufacturing a single bloc assembly of said band, said crown and said blades.

11. A process according to claim 10, further comprising a step of forming at least one groove (7, 7a) or via (8) or duct and introducing at least one electrical wire in said at least one groove or via or duct.

12. A process according to any of claims 10 or 11, further comprising at least one of a polishing step and an anodization step.

13. A process according to any of claims 10 to 12, said process comprising an investment casting process, a strong assembly process, an additive printing and single bloc machining process.

14. A process according to any of claims 10 to 13, said process comprising:
- an investment casting process, the material of the reduced-scale model being aluminum or titanium;
- or a strong assembly process, different parts of the model being assembled by brazing or welding or with help of glue;
- or an additive printing process, the material of the reduced-scale model being plastic or metal;
- or a monobloc machining process, the material of the reduced-scale model being aluminum or PVC or stainless steel or bronze.

15. A process according to any of claims 10 to 14, said process comprising welding or gluing different parts of the model, at least one sensor or gauge being positioned against a surface of at least a first part of said parts before welding or gluing said first part with a second part of said parts.
